# EUROPÄISCHE PATENTANMELDUNG

(11) **EP 0 680 853 A1**
(43) Veröffentlichungstag der Anmeldung: **08.11.1995**
(21) Anmeldenummer: 95105234.9
(22) Anmeldetag: 07.04.1995
(51) Int. Cl.: B60R 21/26, B60R 21/22

(54) **Gasgenerator für Seitenaufprallschutz**

(30) Priorität: 03.05.1994 DE 4415523
(71) Anmelder: TEMIC Bayern-Chemie Airbag GmbH, D-84544 Aschau (DE)
(72) Erfinder: Bender, Richard, Dr., D-91207 Lauf (DE); Maier, Lothar, D-84577 Tüssling (DE)
(74) Vertreter: Maute, Hans-Jürgen, Dipl.-Ing.

(57) **Zusammenfassung**

Gasgenerator für einen als Seitenaufprallschutz dienenden Airbag in einem Fahrzeug. Der Gasgenerator besitzt ein Gehäuse (10) mit einem Flansch zur Befestigung des Gasgenerators an einem Fahrzeugteil, insbesondere an der Rückenlehne eines Fahrzeugsitzes, sowie zum Anbringen des Airbags. Der Gasgenerator besitzt ferner einen strömungsmitteldicht verschlossenen, als Brennkammer dienenden Treibmittelbehälter (20). Der Treibmittelbehälter ist konzentrisch in dem Gehäuse so angeordnet, daß zwischen dem Gehäuse (10) und dem Treibmittelbehälter (20) ein zur Nachverbrennung dienender Ringraum (32) gebildet ist. Der Ringraum ist einerseits über eine sich durch den Verbrennungsvorgang öffnende Strömungsverbindung (34,40) mit dem Inneren des Treibmittelbehälters und andererseits über in der Gehäusewand gebildete Abströmöffnungen (42) mit dem Inneren des Airbags verbindbar, im übrigen jedoch strömungsmitteldicht verschlossen. Der Aufbau des Generators ist somit sehr einfach und seine Baugröße sehr klein.

## Beschreibung

Die vorliegende Erfindung betrifft einen Gasgenerator für einen Airbag in einem Fahrzeug.

Bekanntlich schützen herkömmliche Airbags die Fahrzeuginsassen bei einem Frontalzusammenstoß. Bei zahlreichen Unfällen werden jedoch die Fahrzeuginsassen in seitlicher Richtung, also gegen die Fahrzeugtür bzw. ins Fahrzeuginnere, geschleudert, wogegen der sich vor den Fahrzeuginsassen aufblasende Airbag keinen Schutz bietet. Zu diesem Zweck wäre ein als Seitenaufprallschutz dienender Airbag (Sidebag) von Vorteil, der sich zwischen dem Fahrzeuginsassen und der benachbarten Fahrzeugtür (bzw. der Fahrzeugseitenwand) aufbläst.

Der Gasgenerator für einen derartigen Sidebag könnte in der Fahrzeugtür oder in dem Fahrzeugsitz eingebaut werden. Die für die herkömmlichen Airbags eingesetzten Gasgeneratoren ließen sich allenfalls in die Fahrzeugtür einbauen; für einen Einbau in den Fahrzeugsitz sind sie im allgemeinen jedoch zu groß. Außerdem sind die herkömmlichen Gasgeneratoren konstruktiv aufwendig und entsprechend kostspielig.

Der Erfindung liegt die Aufgabe zugrunde, einen Gasgenerator für einen als Seitenaufprallschutz dienenden Airbag zu schaffen, der einen einfachen Aufbau und eine kleine Baugröße hat. Dennoch sollen Anzündung und Abbrand möglichst schnell ablaufen, ohne daß die Gefahr besteht, daß Treibmittelpartikel in den Airbag gelangen.

Zur Lösung dieser Aufgabe ist der Gasgenerator erfindungsgemäß versehen mit einem Gehäuse, das eine Umfangswand und einen Flansch zur Befestigung des Gasgenerators an einem Fahrzeugteil sowie zum Anbringen des Airbags aufweist, und mit einem strömungsmitteldicht verschlossenen, als Brennkammer dienenden Treibmittelbehälter, der eine Umfangswand und zwei Stirnseiten aufweist und ein Treibmittel einschließlich eines Zünders enthält, wobei der Treibmittelbehälter in dem Gehäuse so angeordnet ist, daß zwischen den Umfangwänden des Gehäuses und des Treibmittelbehälters ein zur Nachverbrennung dienender Ringraum gebildet ist, der einerseits über eine sich durch den Verbrennungsvorgang öffnende Strömungsverbindung mit dem Inneren des Treibmittelbehälters und andererseits über in der Umfangswand des Gehäuses gebildete Abströmöffnungen mit dem Inneren des Airbags verbindbar ist, der jedoch im übrigen strömungsmitteldicht verschlossen ist.

Der erfindungsgemäß ausgebildete Gasgenerator hat einen sehr einfachen konstruktiven Aufbau. Insbesondere sind kein Gewinde und keine Schweißnaht erforderlich. Außerdem zeichnet er sich durch eine sehr geringe Baugröße aus. Der Gasgenerator kann daher beispielsweise in die Rückenlehne eines Fahrzeugsitzes eingebaut werden. Herstellung und Montage sind äußerst einfach.

Dennoch sind eine sehr schnelle Anzündung und Abbrand sichergestellt. Da ferner ein Raum zur Nachverbrennung des Treibmittels vorgesehen ist, besteht keine Gefahr, daß unverbrannte bzw. noch brennende Partikel des Treibmittels in den Airbag gelangen.

Vorteilhafte Ausgestaltungen der Erfindung sind in den Unteransprüchen angegeben.

Anhand der Zeichnungen werden zwei bevorzugte Ausführungsbeispiele der Erfindung näher erläutert.

Es zeigen:
- Fig. 1: einen Längsschnitt durch ein erstes Ausführungsbeispiel eines erfindungsgemäß ausgebildeten Gasgenerators;
- Fig. 2: eine Endansicht des Gasgenerators in Fig. 1;
- Fig. 3: eine Draufsicht auf den Gasgenerator der Fig. 1 und 2;
- Fig. 4: einen Längsschnitt durch ein zweites Ausführungsbeispiel eines erfindungsgemäß ausgebildeten Gasgenerators;
- Fig. 5: eine Endansicht des Gasgenerators in Fig. 4;
- Fig. 6: eine Draufsicht auf den Gasgenerator in Fig. 4 und 5.

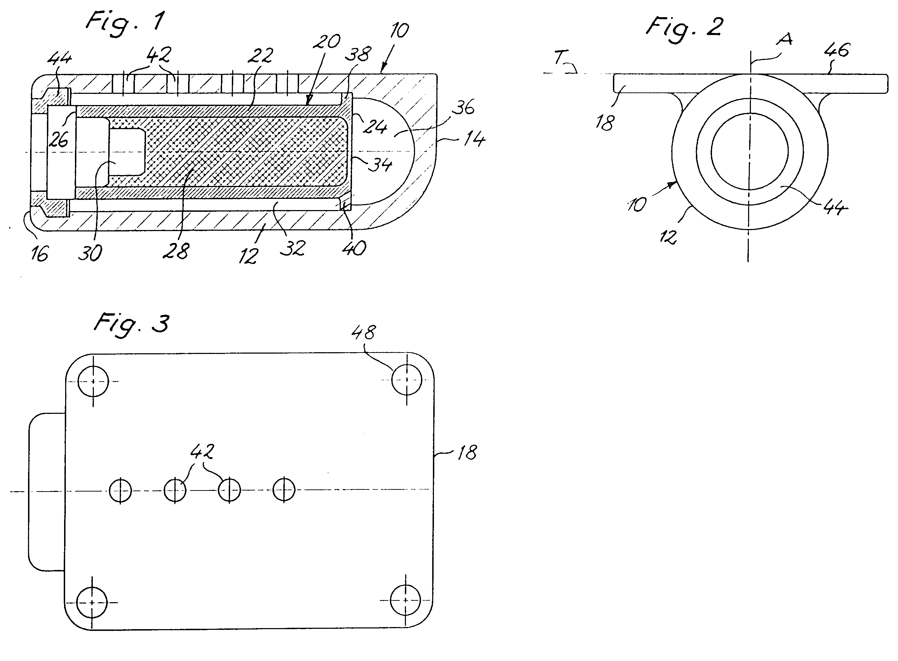

Es wird zunächst Bezug genommen auf den in den Fig. 1 bis 3 gezeigten Gasgenerator, der das Gas für einen als Seitenaufprallschutz dienenden Airbag (nicht gezeigt) in einem Fahrzeug (nicht gezeigt) liefert.

Der Gasgenerator besitzt ein Gehäuse 10 mit einer zylindrischen Umfangswand 12, einer als geschlossene Wand ausgebildeten Stirnseite 14, einer mit einer Zugangsöffnung versehenen Stirnseite 16 und einem Flansch 18. Konzentrisch im Gehäuse 10 ist ein Treibmittelbehälter 20 mit einer zylindrischen Umfangswand 22, einer als geschlossene Wand ausgebildeten Stirnseite 24 und einer offenen Stirnseite 26 angeordnet. Der Treibmittelbehälter 20 enthält ein gaserzeugendes Treibmittel 28. Ferner ist im Bereich der Stirnseiten 16 und 26 ein Zünder 30 in dem Treibmittelbehälter 20 bzw. Treibmittel 28 eingesetzt, wodurch das Innere des Treibmittelbehälters 20 strömungsmitteldicht abgeschlossen ist.

Die Umfangwände 12 und 22 sind radial zueinander beabstandet, so daß zwischen dem Gehäuse 10 und dem Treibmittelbehälter 20 ein Ringraum 32 gebildet ist. Der Treibmittelbehälter 20 besitzt an seiner Stirnseite 24 eine verringerte Wandstärke, so daß die Stirnseite 24 eine Berstmembran 34 bildet, die durch den Verbrennungsvorgang aufplatzt. Angrenzend an der Stirnseite 24 bildet das Gehäuse 10 einen Nachverbrennungsraum 36. Der Nachverbrennungsraum 36 ist von dem Ringraum 32 durch eine an der Stirnseite 38 des Treibmittelbehälters 20 angeformte Ringwand abgetrennt, wobei lediglich in einem (in Fig. 1) unteren Umfangsbereich eine oder mehrere Durchströmöffnungen 40 vorgesehen sind. Im dargestellten Ausführungsbeispiel ist der Nachverbrennungsraum 36 halbkugelförmig ausgebildet; er könnte jedoch auch eine andere Form haben. Zweckmäßigerweise hat er ein für eine vollständige Nachverbrennung ausreichendes Volumen.

Die Berstmembran 34, der Nachverbrennungsraum 36 und die in der Ringwand 38 gebildeten Durchströmöffnungen 40 bilden eine sich durch den Verbrennungsvorgang öffnende Strömungsverbindung zwischen dem Inneren des Treibmittelbehälters 20 und dem Ringraum 32. Der Ringraum 32 seinerseits ist über in der Umfangwand 12 des Gehäuses 10 gebildete Abströmöffnungen 42 mit dem Inneren des Airbags (nicht gezeigt) verbunden. Die Durchströmöffnungen 40 und die Abströmöffnungen 42 sind in um 180° gegeneinander versetzten Bereichen angeordnet, so daß das durch die Durchströmöffnungen 40 einströmende Treibmittelgas den gesamten Ringraum 32 durchströmt, ehe es aus den Abströmöffnungen 42 austreten kann.

An dem (in Fig. 1) linksseitigen Ende des Gehäuses 10 ist ein ringförmiger Abstandshalter 44 eingesetzt, der den Zünder (nicht gezeigt) positioniert und seinerseits durch den eingerollten Gehäuserand im Gehäuse 10 festgelegt wird. Der Ringraum 32 ist somit, abgesehen von den Durchströmöffnungen 40 und den Abströmöffnungen 42, strömungsmitteldicht verschlossen.

Der Flansch 18 ist einstückig mit der Umfangwand 12 und der Stirnwand 14 des Gehäuses 10 ausgebildet. Wie in Fig. 2 zu sehen ist, ist der Flansch 18 relativ zur Umfangswand 12 so angeordnet, daß seine von der Umfangswand abgewandte Grundfläche 46 in einer Tangentialebene T liegt, die tangential zum Außenumfang der zylindrischen Umfangswand 12 verläuft. Wie insbesondere in Fig. 3 zu sehen ist, hat der Flansch 18 einen ungefähr rechteckigen Umriß, wobei er zu der auf der Tangentialebene T senkrecht stehenden Axialebene A der Umfangswand 12 symmetrisch angeordnet ist.

Bei dem in den Fig. 1 bis 3 gezeigten Ausführungsbeispiel sind vier Abströmöffnungen 42 vorgesehen, die auf einer Linie liegen, in der sich die Tangentialebene T und die Axialebene A schneiden. Es versteht sich jedoch, daß auch eine andere Anzahl sowie eine andere Anordnung von Abströmöffnungen 42 möglich sind. Der Flansch 18 ist im übrigen im Bereich seiner vier (abgerundeten) Ecken mit Befestigungslöchern 48 versehen.

Der Gasgenerator wird beispielsweise an dem Skelett der Rückenlehne (nicht gezeigt) eines Fahrzeugs in der Weise angebracht, daß er im Inneren der Rückenlehne liegt und lediglich die Grundfläche 46 nach außen zeigt und hierbei dem Airbag (nicht gezeigt) zugewandt ist. Wird das gaserzeugende Treibmittel 28 gezündet, so platzt die Berstmembran 34 auf. Das Heißgas strömt dann durch den Nachverbrennungsraum 36, die Durchströmöffnungen 40, den Ringraum 32 und die Abströmöffnungen 42 in das Innere des Airbag. Da das Treibmittelgas im Nachverbrennungsraum 36, gegebenenfalls auch noch im Ringraum 32, die Möglichkeit zur Nachverbrennung hat, wird sichergestellt, daß keine unverbrannten bzw. noch brennenden Partikel des Treibmittels in das Innere des Airbags gelangen.

In dem Ringraum 32, gegebenenfalls auch in dem Nachverbrennungsraum 36 kann ein Filter- und Kühlmaterial, beispielsweise in Form eines metallischen Maschengestricks, angeordnet werden. Hierdurch läßt sich das Aufblasverhalten des Gasgenerators beeinflussen. Insbesondere lassen sich hierdurch die Temperatur und der Druck im Inneren des Airbags steuern.

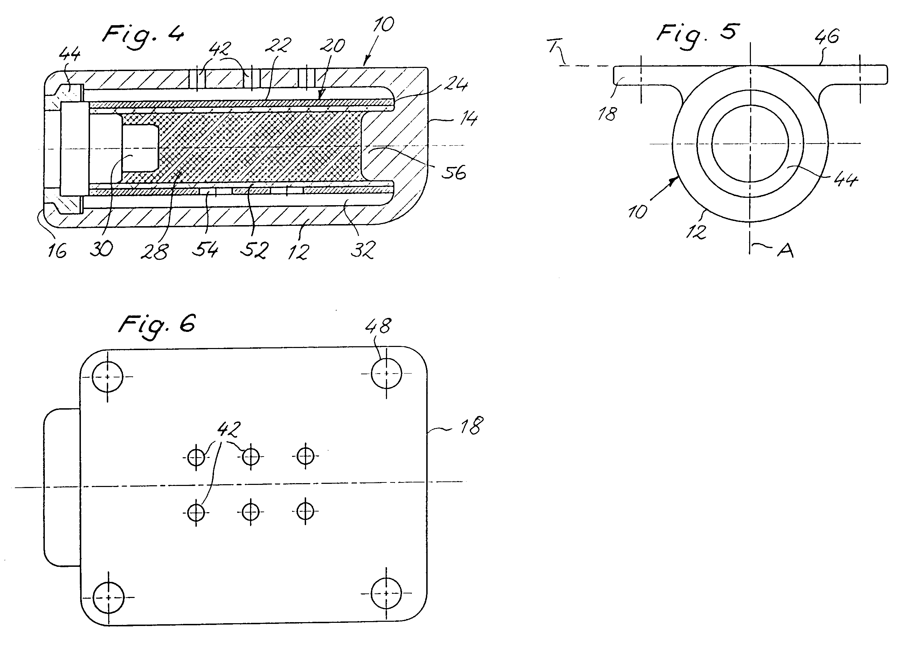

Das in den Fig. 4 bis 6 gezeigte Ausführungsbeispiel entspricht im wesentlichen dem Ausführungsbeispiel der Fig. 1 bis 3. Sich entsprechende Bauteile wurden daher mit den gleichen Bezugszeichen bezeichnet.

Ein Unterschied besteht darin, daß bei dem Ausführungsbeispiel der Fig. 4 bis 6 die Umfangswand 22 des Treibmittelbehälters 20 als beidseitig offene zylindrische Hülse ausgebildet ist, die mit ihrer Stirnseite 24 auf einen Gehäuseansatz 56 aufgeschoben ist. Der Treibmittelbehälter 20 ist somit an seiner Stirnseite 24 strömungsmitteldicht verschlossen. Statt einer stirnseitigen Berstmembran sind in der Umfangswand 22 des Treibmittelbehälters 20 Durchströmöffnungen 54 vorgesehen, die innen von einer Dämmfolie 52 verschlossen sind. Die Durchströmöffnungen liegen in einem Bereich, der um 180° gegenüber den Abströmöffnungen 42 versetzt ist.

Bei dem Ausführungsbeispiel der Fig. 4 bis 6 wird durch den Verbrennungsvorgang die Dämmfolie 52 im Bereich der Durchströmöffnungen 54 aufgerissen, so daß das Heißgas aus dem Treibmittelbehälter 20 direkt - und nicht über einen weiteren Nachverbrennungsraum - in den Ringraum 32 einströmt, von wo es durch die Abströmöffnungen 42 in den Airbag gelangt.

Fig. 6 zeigt als mögliche andere Ausbildung der Abströmöffnungen 42 eine Gruppe von sechs Öffnungen, die beidseitig entlang der Schnittlinie zwischen der Tangentialebene T und der Axialebene A angeordnet sind.

Im übrigen ist das Ausführungsbeispiel der Fig. 4 bis 6 sowohl hinsichtlich seines Aufbaues wie auch seiner Funktionsweise identisch mit dem Ausführungsbeispiel der Fig. 1 bis 3, so daß keine weiteren Erläuterungen erforderlich sind.

## Patentansprüche

1. Gasgenerator für einen als Seitenaufprallschutz dienenden Airbag in einem Fahrzeug, mit einem Gehäuse (10), das eine Umfangswand (12) und einen Flansch (18) zur Befestigung des Gasgenerators an einem Fahrzeugteil sowie zum Anbringen des Airbags aufweist, und mit einem strömungsmitteldicht verschlossenen, als Brennkammer dienenden Treibmittelbehälter (20), der eine Umfangswand (22) und zwei Stirnseiten (24,26) aufweist und ein Treibmittel (28) einschließlich eines Zünders (30) enthält, wobei der Treibmittelbehälter (20) in dem Gehäuse (10) so angeordnet ist, daß zwischen den Umfangwänden (12,22) des Gehäuses (10) und des Treibmittelbehälters (20) ein zur Nachverbrennung dienender Ringraum (32) gebildet ist, der einerseits über eine sich durch den Verbrennungsvorgang öffnende Strömungsverbindung (34-40; 52,54) mit dem Inneren des Treibmittelbehälters (20) und andererseits über in der Umfangswand (12) des Gehäuses (10) gebildete Abströmöffnungen (42) mit dem Inneren des Airbags verbindbar ist, der jedoch im übrigen strömungsmitteldicht verschlossen ist.

2. Gasgenerator nach Anspruch 1, dadurch gekennzeichnet, daß die Abströmöffnungen (42) und die sich durch den Verbrennungsvorgang öffnende Strömungsverbindung (34-40; 52, 54) an voneinander entfernten Stellen in den Ringraum (32) münden, so daß das Heißgas vor Austritt aus den Abströmöffnungen (42) den gesamten Ringraum (32) durchströmt.

3. Gasgenerator nach Anspruch 1 oder 2, dadurch gekennzeichnet, daß die sich durch den Verbrennungsvorgang öffnende Strömungsverbindung (34-40) durch einen an einer Stirnseite (24) des Treibmittelbehälters (20) angrenzenden Nachverbrennungsraum (36) verläuft.

4. Gasgenerator nach Anspruch 3, dadurch gekennzeichnet, daß der Nachverbrennungsraum (36) ein für eine vollständige Nachverbrennung ausreichendes Volumen hat.

5. Gasgenerator nach Anspruch 3 oder 4, dadurch gekennzeichnet, daß die Strömungsverbindung (34-40) eine in der Stirnseite (24) des Treibmittelbehälters (20) gebildete Berstmembran (34) sowie eine oder mehrere in der Stirnseite (38) des Ringraums (32) gebildete Durchströmöffnungen (40) aufweist.

6. Gasgenerator nach Anspruch 1 oder 2, dadurch gekennzeichnet, daß die sich durch den Verbrennungsvorgang öffnende Strömungsverbindung (52,54) durch die Umfangswand (22) des Treibmittelbehälters (20) verläuft.

7. Gasgenerator nach Anspruch 6, dadurch gekennzeichnet, daß die Strömungsverbindung (52,54) in der Umfangswand (20) des Treibmittelbehälters (20) gebildete Durchströmöffnungen (54) aufweist, die von einer durch den Verbrennungsvorgang aufreißenden Dämmfolie (52) verschlossen sind.

8. Gasgenerator nach einem der vorhergehenden Ansprüche, dadurch gekennzeichnet, daß der Flansch (18) an der Rückenlehne eines Fahrzeugsitzes anbringbar ist.

9. Gasgenerator nach einem der vorhergehenden Ansprüche, dadurch gekennzeichnet, daß der Flansch (18) und die Umfangswand (12) des Gehäuses (10) einstückig ausgebildet sind.

10. Gasgenerator nach einem der vorhergehenden Ansprüche, dadurch gekennzeichnet, daß die Umfangswände (12, 22) des Gehäuses (10) und des Treibmittelbehälters (20) zylindrisch ausgebildet sind.

11. Gasgenerator nach Anspruch 10, dadurch gekennzeichnet, daß die dem Airbag zugewandte Grundfläche (46) des Flansches (18) in einer Tangentialebene (T) der Umfangswand (12) des Gehäuses (10) liegt.

12. Gasgenerator nach Anspruch 11, dadurch gekennzeichnet, daß die Abströmöffnungen (42) längs einer Linie angeordnet sind, in der sich die Tangentialebene (T) und die auf der Tangentialebene (T) senkrecht stehende Axialebene (A) der Umfangwand (12) des Gehäuses (10) schneiden.

13. Gasgenerator nach einem der vorhergehenden Ansprüche, dadurch gekennzeichnet, daß in dem zwischen den Umfangwänden (12,22) gebildeten Ringraum (32) ein Filter- und Kühlmaterial angeordnet ist.

14. Gasgenerator nach Anspruch 3, dadurch gekennzeichnet, daß in dem an der Stirnseite (24) des Treibmittelbehälters (20) angrenzenden Nachverbrennungsraum (36) ein Filter- und Kühlmaterial angeordnet ist.
